# EUROPÄISCHE PATENTANMELDUNG

(11) **EP 2 439 045 A1**
(43) Veröffentlichungstag der Anmeldung: **11.04.2012**
(21) Anmeldenummer: 11183745.6
(22) Anmeldetag: 04.10.2011
(51) Int. Cl.: B29C 47/92, G01N 11/08, C08G 63/08

(54) **Verfahren zur Charakterisierung von Polymeren**

(30) Priorität: 07.10.2010 EP 10013391
(71) Anmelder: Bayer MaterialScience AG, 51368 Leverkusen (DE)
(72) Erfinder: Konrad, Stephan, 41541 Dormagen (DE); Braun, Stefanie, 51069 Köln (DE); Rechner, Johann, 47906 Kempen (DE); Knopf, Rainer, 47802 Krefeld (DE); Foubert, Tom, 9100 Sint-Niklaas (BE); Bruynseels, Franky, 9170 Sint Gillis-Waas (BE); De Bock, Maarten, 2920 Kalmthout (BE)

(57) **Zusammenfassung**

Gegenstand der Erfindung sind ein Verfahren und eine Vorrichtung zur automatischen Bestimmung der Lösungsviskosität und/oder der Schmelzvolumenfließrate (MVR) von Polymeren, die in Lösung hergestellt werden, insbesondere von Polycarbonaten, über die Methode der Gelpermeationschromatographie (GPC) an Proben, die direkt dem Herstell-Prozess der Polymeren entnommen werden.

## Beschreibung

Gegenstand der Erfindung sind ein Verfahren und eine Vorrichtung zur automatischen Bestimmung der Lösungsviskosität und/oder der Schmelzvolumenfließrate (MVR) von Polymeren, die in Lösung hergestellt werden, insbesondere von Polycarbonaten, über die Methode der Gelpermeationschromatographie (GPC) an Proben, die direkt dem Herstell-Prozess der Polymeren entnommen werden. Insbesondere erlaubt dieses Verfahren die Bestimmung der Lösungsviskosität und/oder der MVR von Polymeren, bevorzugt Polycarbonat (PC), das direkt aus dem Phasengrenzflächenverfahren entnommen wird.

Wichtige Parameter zur Charakterisierung von Polymeren, insbesondere Polycarbonaten, sind die Lösungsviskosität und/oder die MVR. Bei der industriellen Herstellung der Polymeren ist es wichtig, bereits sehr früh im Herstellprozess diese Eigenschaften zu messen, um bei Bedarf regulierend in den Herstellprozess eingreifen zu können.

Die Messung der relativen Lösungsviskosität (ηᵣₑₗ) von Polymerlösungen mit dem Ubbelohde-Viskosimeter und die Messung der Schmelzvolumenfließrate (MVR) mit einem Schmelzindexprüfgerät sind etablierte analytische Verfahren zur Charakterisierung von Polycarbonat (Schnell, Hermann, Polymer Reviews. Vol. 9: Chemistry and Physics of Polycarbonates, 1964). Die Lösungsviskosität wird gemäß DIN 51562 bestimmt; die MVR gemäß DIN EN ISO 1133. Beide Verfahren haben für die Lösung der Aufgabenstellung allerdings den großen Nachteil, dass sich konzentrierte PC-Lösungen praktisch nicht messen lassen. Für ein Verfahren zur On-line-Messung der Lösungsviskosität müsste die zu messende PC-Lösung hinreichend verdünnt werden (auf ca. 0,5 Gew.-%). Dies bedeutet einen zusätzlichen apparativen und steuerungstechnischen Aufwand für die Verdünnung der entnommenen PC-Lösungsprobe aus dem PC-Herstellprozess und die Kontrolle zur Einhaltung der Konzentration der zu messenden Probe, so dass diese analytische Bestimmungsmethode zur Lösung der Aufgabe ungeeignet ist. Für die Bestimmung eines MVR-Wertes müsste die PC-Lösung zunächst gänzlich getrocknet werden. Auch dies bedeutet einen hohen zusätzlichen Aufwand.

Daher wurde im erfindungsgemäßen Verfahren die Methode der Größenausschluß-Chromatographie oder der Gel-Permeations-Chromatographie (GPC) herangezogen. Mit Hilfe von Polymer-Kalibriersubstanzen bekannter Molmasse und durch Messung von deren Lösungsviskosität mit dem Ubbelohde-Viskosimeter und/oder der MVR mit einem Schmelzindexprüfgerät können Kalibrierbeziehungen erstellt werden, die die Umrechnung von Daten, die mit der GPC-Methode ermittelt werden, zum Beispiel von Molekulargewichten, in Lösungsviskositäten und/oder MVR ermöglicht.

Die Verwendung der GPC-Methode als Analysenverfahren zur kontinuierlichen Überwachung verschiedener Produktions-Prozesse ist bereits grundsätzlich bekannt, wie die nachfolgenden Literaturzitate belegen, denn die dafür verwendeten Chromatographie-Säulen haben sich bereits im stationären "Off line"-Verfahren mit manueller Probenaufgabe auf die GPC-Säule bewährt, auch bei einer Vielzahl von hintereinander folgenden Mehrfachanalysen.

Nach bisher bekannten Verfahren müssen die konzentrierten Polymer-haltigen Lösemittelphasen verdünnt werden, bevor sie auf die GPC-Säule gegeben werden, um reproduzierbare Messungen zu ermöglichen. Üblicherweise werden Polycarbonat-Lösungen mit mehr als 10 Gew.-% mit dem gleichen Lösemittel auf deutlich weniger als 1 Gew.-%, vorzugsweise auf 0,2 Gew.% verdünnt, um über ein Probenaufgabesystem reproduzierbare Mengen von ca. 100 µl auf die GPC-Säule aufbringen zu können. Würden aber diese Probenmengen direkt aus dem Verfahren, z.B. als 16 Gew.-%-ige Polycarbonat-Lösung auf eine GPC-Säule dosiert werden, wäre die GPC-Säule damit völlig überlastet und würde kein brauchbares Ergebnis liefern, wenn die konzentrierte Lösung wegen der hohen Viskosität überhaupt mit dem Probenaufgabesystem reproduzierbar aufgegeben werden kann.

Es hat daher an Bemühungen nicht gefehlt, dieses Problem der automatischen Probennahme und Dosierung zu lösen. So wird in WO 2001/083583 A1 ein on-line-Messverfahren zur Bestimmung des Molekulargewichts von PC aus dem Phasengrenzflächenverfahren mit der GPC-Methode, sowie die Auswertung und Übermittlung der Messdaten bis hin zur Reaktionssteuerung beschrieben. Allerdings wird die entnommene PC-haltige Lösemittelphase nicht von Resten anorganischer Salze und von Wasser befreit. Diese Nebenbestandteile stören die Messung des Molekulargewichts auf der GPC-Säule erheblich und beeinträchtigen das Messergebnis. Ebenso gibt es keine geeigneten kommerziellen Probeaufgabesysteme, die so hochkonzentrierte Lösungen präzise dosieren und injizieren können. Es gibt in der WO 2001/083583 A1 keine Hinweise darauf, wie die Probenmenge bei einer solch hohen Konzentration sinnvoll begrenzt werden kann, um aussagekräftige Messergebnisse der GPC-Methode zu erhalten. Da in WO 2001/083583 A1 auch keine weiteren experimentellen Daten zur Verfügung stehen, lassen sich daraus keine Anleitungen zur Lösung der vorliegenden Aufgabe entnehmen.

Die US 4,258,564 A beschreibt ein automatisiertes und kontinuierliches Verfahren zur Bestimmung des Molekulargewichts von Polymeren, z.B. Polybutadien, nach der GPC-Methode, sowie einen Apparat zur Durchführung dieser Methode. Dabei umfasst dieser Apparat die Probenentnahme aus dem Reaktor sowie die Probenförderung zu einem Dosierventil, die Verdünnung eines definierten Probenvolumens aus diesem Dosierventil mit einem Lösemittel in einem definierten Verhältnis zueinander, die Förderung der verdünnten Probenlösung zu einem zweiten Dosierventil, welches eine genau definierte Menge der verdünnten Probenlösung auf die GPC-Säule zur Bestimmung des Molekulargewichts dosiert. Die Endkonzentration der verdünnten, in die GPC-Säule dosierten Probenlösung liegt dabei ungefähr in der gleichen Größenordnung wie die der oben zitierten PC-Lösung, die üblicherweise für GPC-Messungen verwendet wird. Ebenso haben die dosierten Probenvolumina mit ca. 500 µl eine ähnliche Größenordnung wie die auf die GPC-Säule üblicherweise injizierten PC-Lösungsvolumina. Da eine Verdünnung von aus der PC-Reaktion entnommenen Proben, wie sie in US 4,258,564 A beschrieben ist, nicht angestrebt wird, ist das dort beschriebene Verfahren zur Lösung der vorliegenden Aufgabe nicht geeignet; denn der zusätzliche Aufwand zur Durchführung und zur Kontrolle der Probenverdünnung macht ein On-line-Analysenverfahren teuer und störungsanfällig.

US 3,744,219 A offenbart ebenfalls ein on-line ausführbares GPC-Analysenverfahren, wobei jedoch eine manuelle Probeneingabe erforderlich ist. Die Dosierung eines definierten Probenvolumens geschieht durch sogenannte "sample loops", kleinste flüssigkeitsgefüllte Kanäle eines bestimmten Volumens, die sich in mehrfacher Ausführung zwischen zwei Ventilen befinden und Probelösungen aufnehmen können. Aus diesen Kanälen wird, nach den gleichen Prinzipien wie in US 4,258,564 A beschrieben, die so definierte Probenmenge durch Lösemittel verdrängt und in die GPC-Säule gefördert. Allerdings werden die Konzentrationen und die Mengen der auf der GPC-Säule zu messenden Proben nicht offenbart. Auch ist die Anordnung der Kanäle zwischen zwei Ventilen sehr aufwendig und erfordert einen zusätzlichen Steuerungs-Aufwand, so dass US 3,744,219 A keine geeignete Problemlösung für die vorliegende Aufgabe bereitstellt.

US 5,462,660 A beschreibt eine Probenahme- und Dosier-Vorrichtung für eine Hochdruck-Flüssig-Chromatographie die nach den gleichen Prinzipien von Dosierventilen und von "sample loops" funktioniert, wie bereits in US 4,258,564 A und US 3,744,219 A beschrieben. Jedoch sind in der Apparatur zwei 6-Wege-Ventile und zwei Pumpen erforderlich, die den Steuerungsaufwand und das Risiko der Störanfälligkeit erhöhen.

Die WO 2000/20873 A1 beschreibt in Zusammenhang mit anderen analytischen Verfahren ein Dosierventil mit mehreren "sample loops" zur Aufarbeitung mehrer Proben hintereinander, wobei anstelle der angestrebten automatischen Probennahme eine Proben-Injektion mit Spritzen in das Dosierventil erfolgt. Bei diesem Verfahren lassen sich zwar sehr kleine Probenmengen aus sehr engen Flüssigkeitskanälen dosieren, aber die hier beschriebene Technik ist nicht ausreichend zur Lösung der vorliegenden Aufgabe.

Ausgehend vom beschriebenen Stand der Technik stellt sich die Aufgabe, ein möglichst einfaches und wenig störanfälliges Analysenverfahren bereitzustellen, das zur automatischen und kontinuierlichen "On-line-Überwachung" von Änderungen des Molekulargewichts-Aufbaus von Polymeren, insbesondere von Polycarbonat, das nach dem Phasengrenzflächen-Verfahren hergestellt wurde, geeignet ist, wobei solche Änderungen möglichst frühzeitig im Herstell-Prozess erkannt werden sollen, um ebenso frühzeitig geeignete Änderungen in der Reaktionssteuerung vornehmen zu können.

Daher bestand eine Aufgabe der vorliegenden Erfindung darin, eine einfache Methode bereitzustellen, um bei geringer Störanfälligkeit, reproduzierbar, effizient, und in kurzen Abständen bei einer nach Bedarf optimierten Messfrequenz die Bestimmung der Lösungsviskosität und/oder der Schmelzvolumenfließrate (MVR) eines Polymers während des Herstellprozesses zu ermöglichen.

Es wurde nun gefunden, dass diese Aufgabe gelöst werden kann, indem eine Polymer-Lösung dem Herstellprozess direkt entnommen wird und, im Gegensatz zur sonst üblichen Vorgehensweise, ohne weitere Verdünnung einer GPC-Säule zur Bestimmung gelpermeationschromatographischer Daten, zum Beispiel des Molekulargewichts, zugeführt wird, wobei das auf die GPC-Säule dosierte Probenvolumen weniger als 10 µl beträgt. Insbesondere gilt dies für eine mit voll entsalztem Wasser ggf. mehrfach gewaschene und von Restsalzen weitestgehend befreite Lösung mit einem Polymer-, insbesondere Polycarbonatgehalt von bis zu ca. 20 Gew.-%, die dem Herstellprozess an geeigneter Stelle direkt entnommen werden kann.

Die chromatographische Trennung der verschiedenen Molmassen-Anteile des Polymeren gelingt in gleicher Weise wie bei der üblichen Dosierung größerer Mengen an verdünnter Polymer-Lösung, so dass die Auswertung der Messergebnisse problemlos ist und zu übereinstimmendem Molmassen führt, die in Viskositätszahlen und/oder MVR umgerechnet werden können. Dies ist insofern überraschend, da man erwarten würde, dass die Dosierung winziger hochkonzentrierter Probenmengen (z.B. von 4 µl im Vergleich zu relativ großen Probemengen von ca. 100 µl verdünnter Lösung) zu Messproblemen führen und problematisch hinsichtlich Reproduzierbarkeit und Störanfälligkeit sein könnte.

Durch das erfindungsgemäße Verfahren werden sogenannte "Off line"-Analysen mit Probentransport zu beschränkt verfügbaren stationären Geräten in Labors und dem verzögerten Informationsrückfluss vermieden. Die Angabe der gelpermeationschromatographischen Daten, zum Beispiel der Molekulargewichte des hergestellten Polymeren, wird als Lösungsviskositätszahl (relative Lösungsviskosität ηᵣₑₗ) gemäß DIN 51562; oder als Schmelzvolumenfließrate (MVR) gemäß DIN EN ISO 1133, beispielsweise bei 300°C und 1,2 kg Belastung, bereitgestellt, da diese Angaben Spezifikationsmerkmale für Polymer-Handelsprodukte, insbesondere Polycarbonat-Handelsprodukte sind. Das Verfahren ermöglicht die Ermittlung von Lösungsviskosität und/oder MVR des Polymeren aus den mittels GPC gemessenen gelpermeationschromatographischen Daten, zum Beispiel der Molekulargewichte, auf der Basis von Kalibrierbeziehungen.

Ein Gegenstand der Erfindung ist ein "on-line" Verfahren zur Bestimmung der Molmassenverteilung und der daraus resultierenden Lösungsviskosität und/oder der Schmelzvolumenfließrate (MVR) von Polymeren, insbesondere von Polycarbonaten, die in gelöster Form anfallen, enthaltend folgende Schritte:
i. Kontinuierliche Entnahme eines Teilstroms einer Lösung des zu messenden Polymeren in einem organischen Lösemittel aus einem Anlagenteil des Polymer-Herstellprozesses, in dem diese Polymer-Lösung von anorganischen Salzen weitestgehend befreit ist;
ii. Entnahme einer Probe mit einem Volumen von 1 bis 10 µl aus dem Teilstrom;
iii. Optional Rückführen des Teilstroms in den Polymer-Herstellprozess;
iv. Zuführen der Probe zu einem GPC-Messsystem und Ermittlung gelpermeationschromatographischer Daten, zum Beispiel des Molekulargewichts M_{w} des Polymeren aus der Probenlösung;
v. Optional Entnahme einer Kalibrierprobe mit einem Volumen von 1 bis 10 µl einer Lösung eines Polymeren mit bekannten gelpermeationschromatografischen Daten, z. B. M_{w}, ηᵣₑₗ und MVR, wobei die Polymerkonzentration in der Kalibrierprobe gleich groß ist wie die Polymerkonzentration im Teilstrom aus dem Polymer-Herstellprozess, aus einem Vorratsbehälter;
vi. Optional Zuführen der Kalibrierprobe zu einem GPC-Messsystem und Ermittlung gelpermeationschromatographischer Daten, zum Beispiel des Molekulargewichts M_{w} des Polymeren aus der Kalibrierlösung;
vii. Automatische Ermittlung der Lösungsviskosität ηᵣₑₗ und/oder der Schmelzvolumenfließrate MVR der Probe aus den gemessenen gelpermeationschromatographischen Daten, zum Beispiel dem Molekulargewicht M_{w}, auf der Basis von Kalibrierbeziehungen.

Bei der Kalibrierprobe handelt es sich um ein Polymer mit bekanntem M_{w}, ηᵣₑₗ und MVR und bekannter Molekulargewichtsverteilung. Mit dieser Kalibrierprobe und geeigneter Software wird eine integrale Kalibrierung durchgeführt. In einer bevorzugten Ausführung enthalten die Kalibrierprobe und die eigentlich zu messende Probe das gleiche Polymer.

Anstelle von M_{w} können im erfindungsgemäßen Verfahren auch andere Molekulargewichte herangezogen werden, beispielsweise Mₙ oder Mₚ.

In einer Ausführungsform des erfindungsgemäßen Analysenverfahrens wird zur Vereinfachung an geeigneter Stelle im Herstellprozess eine Probe der Polymer-Lösung entnommen, die direkt und ohne weitere Vorbehandlungen wie Reinigung oder Verdünnung in ein GPC-Analysengerät eingeführt und vermessen wird. Das Analysenverfahren ist somit wenig störanfällig und ermöglicht zuverlässige Angaben zu gelpermeationschromatographischen Daten, zum Beispiel den Molekulargewichten von Polymeren, ausgedrückt in Lösungsviskosität und/oder MVR, in kurzen Zeitabständen, beispielsweise die Bestimmung von wenigstens einem Messwert pro Stunde. Merkmale des erfindungsgemäßen Verfahrens sind der direkte Einsatz und die präzise Dosierung kleinster Mengen der hochkonzentrierten, gewaschenen Polymer-Reaktionslösungen auf die GPC-Säule ohne die sonst übliche vorherige Verdünnung der Proben.

Die Konzentration des zu messenden Polymeren, z.B. von Polycarbonat, in der Lösung in einem organischen Lösemittel bei Raumtemperatur (22°C) ist üblicherweise größer als 10 Gew.-%, vorzugsweise beträgt sie von 10 bis 20 Gew.% und besonders bevorzugt von 14 bis 18 Gew.-%.

Geeignete organische Lösemittel für das zu messende Polymer sind im Prinzip bekannt und finden in den entsprechenden industriellen Herstellprozessen Verwendung. Beispielsweise sind geeignete Lösemittel für Polycarbonat halogenierte Kohlenwasserstoffe wie z.B. Methylenchlorid, Chloroform, Mono- oder Dichlorethan, Tetrachlorkohlenstoff, Fluor-haltige Chlorkohlenwasserstoffe und Chlorbenzol, oder aromatische Lösemittel wie Benzol, Toluol und Alkylbenzole oder cyclische Ether wie zum Beispiel Tetrahydrofuran und Dioxan. Bevorzugte Lösemittel sind Methylenchlorid und Chlorbenzol. Besonders bevorzugte Lösemittel sind Mischungen aus Methylenchlorid und Chlorbenzol. In ähnlicher Weise verhält es sich mit anderen Polymeren.

Das Verfahren ist grundsätzlich auf alle Polymere anwendbar, die im Herstellprozess in gelöster Form anfallen und deren Molekulargewichtsverteilung mittels einer GPC-Analyse ausreichend genau charakterisiert werden können. Beispiele sind Polyacrylate, Polystyrol oder Polyetherketone. In einer Ausführungsform wird das Verfahren auf Polycarbonate angewandt, die nach dem Phasengrenzflächenverfahren hergestellt werden.

Die Herstellung von Polycarbonaten erfolgt in bekannter Weise aus Diphenolen, Kohlensäurederivaten, gegebenenfalls Kettenabbrechern und gegebenenfalls Verzweigern. Katalysatoren, Lösungsmittel, Aufarbeitung, Reaktionsbedingungen etc. für die Polycarbonatherstellung nach dem Phasengrenzverfahren sind hinreichend beschrieben und bekannt. Als Kohlensäurederivat dient vorzugsweise Phosgen. Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der Polycarbonate subsumiert werden.

Die thermoplastischen Polycarbonate, die in dem erfindungsgemäßen Verfahren bevorzugt eingesetzt werden, einschließlich der thermoplastischen, aromatischen Polyestercarbonate haben ein mittleres Molekulargewicht M_{w} (ermittelt durch Messung der relativen Viskosität bei 25°C in CH₂Cl₂ und einer Konzentration von 0,5 g pro 100 ml CH₂Cl₂) von 12.000 bis 120.000, vorzugsweise von 15.000 bis 80.000 und insbesondere von 15.000 bis 60.000.

Für das erfindungsgemäße Verfahren geeignete Diphenole zur Herstellung von Polycarbonat sind im Stand der Technik vielfach beschrieben. Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die für die Umsetzung mit den Dihydroxyarylverbindungen geeigneten Diarylcarbonate sind solche der allgemeinen Formel (I) 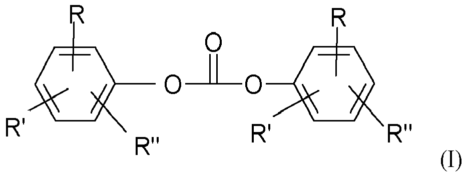 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R"' für Wasserstoff, lineares oder verzweigtes C₁-C₃₄-Alkyl, C₇-C₃₄-Alkylaryl oder C₆-C₃₄-Aryl steht.

C₁-C₃₄-Alkyl steht im Rahmen der Erfindung beispielsweise für Methyl, Ethyl, n-Propyl, isoPropyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für C₆-C₃₄-Aryl sind Phenyl, o-, p-, m-Tolyl, Naphthyl, Phenanthrenyl, Anthracenyl oder Fluorenyl.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Bevorzugte Diarylcarbonate sind beispielsweise Diphenylcarbonat, Methylphenyl-phenyl-carbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat. Ganz besonders bevorzugt ist Diphenylcarbonat. Es können sowohl ein Diarylcarbonat als auch verschiedene Diarylcarbonate verwendet werden.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

Die zur Regelung des Molekulargewichtes benötigten monofunktionellen Kettenabbrecher, wie beispielsweise Phenol oder Alkylphenole, insbesondere Phenol, p-tert. Butylphenol, isoOctylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan. Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden.

Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol%.

Die zu messende Polymer- insbesondere Polycarbonat-Lösung in einem organischen Lösemittel wird dem Polymer- insbesondere Polycarbonat-Herstellprozess nach dem Phasengrenzfächen-Verfahren frühestens an der Stelle entnommen, an der die Polymer- insbesondere Polycarbonat-Lösung von der wässrigen Phase des vollständig ausreagierten Reaktionsgemischs befreit ist (da die Anwesenheit der stark alkalischen salzhaltigen wässrigen Phase bei der Größenausschluss-Chromatographie auf der GPC-Säule stören würde). Da die von der wässrigen Reaktionsphase abgetrennte organische Polymer- insbesondere Polycarbonat-haltige Lösemittelphase immer noch Anteile von Wasser und anorganischen Salzen enthält, ist es für das GPC-Messverfahren von Vorteil, solche Anteile durch geeignete Maßnahmen weitgehend zu entfernen.

Es ist dabei unerheblich, ob diese Reinigungsmaßnahmen der organischen Phase im üblichen Ablauf des Polymer- insbesondere Polycarbonat-Herstellprozesses nach dem Phasengrenzflächenverfahren geschehen oder ob sie speziell nur auf die entnommene Polymer-Lösungs-Probe, insbesondere Polycarbonat-Lösungs-Probe angewendet werden. Solche Reinigungsmaßnahmen an der Polymer-Lösung, insbesondere Polycarbonat-Lösung sind zum Beispiel die Wäsche mit vollentsalztem Wasser (VE-Wasser) unter intensiver Vermischung und anschließender Trennung der beiden Phasen, wobei diese beiden Prozesse auch mehrfach wiederholt werden können. Geeignete Apparate zur Phasen-Mischung sind zum Beispiel Kreiselpumpen, gerührte Apparate oder statische Mischer und Kombinationen davon; geeignete Apparate zur Phasentrennung sind zum Beispiel Absitzgefäße nach dem Schwerkraftprinzip, Zentrifugen oder Coalescer und Kombinationen davon. Dies gilt analog für andere Herstellverfahren für Polymere, bei denen anorganische Salze im Polymer vorhanden sind.

Weitere Reinigungsmaßnahmen für die organische Polymer-Phase sind zum Beispiel die Behandlung mit Ionenaustauschern zur Entfernung von Salzen oder die Behandlung mit Adsorbentien wie zum Beispiel Aktivkohle, Zeolithe oder Kieselgur zur Adsorption von Salzen und Wasser.

Vorzugsweise wird die Polymer-Lösung, insbesondere die Polycarbonat-Lösung zur Probennahme für die GPC-Messung dem Polymer- insbesondere Polycarbonat-Herstellprozess im Verfahrensabschnitt der Wäsche der organischen Polymer- insbesondere Polycarbonat-Phase mit VE-Wasser entnommen. Besonders bevorzugt ist die Probenentnahme nach mehrmaliger Wäsche der organischen Polymer- insbesondere Polycarbonat-Phase mit VE-Wasser an der Stelle, an der die von der organischen Polymer- insbesondere Polycarbonat-Lösung abgetrennte wässrige Phase eine elektrische Leitfähigkeit von weniger als 5 µS aufweist.

Das erfindungsgemäße Analysenverfahren kann mit der im Folgenden beschriebenen Vorrichtung durchgeführt werden. Dabei werden Polymer-Lösungsproben aus dem Polymer-Herstell-Prozess automatisch in vorgegebenen, aber variabel einstellbaren Zeitabständen entnommen und vermessen, so dass (über gelpermeationschromatographische Daten) eine bedarfsgerechte Kontrolle des Polymer-Molekulargewichts und somit der Polymer-Lösungsviskosität möglich ist. Mit einer solchen bedarfsgerechten Kontrolle sollen sowohl im stationären Herstell-Prozess als auch bei geplanter Änderung von Reaktions-Parametern sowohl ungeplante als auch geplante Änderungen von Polymer-Molmassen bzw. Polymer-Lösungsviskositäten möglichst schnell erkannt werden, um gegebenenfalls möglichst schnell durch gezielte Änderung von Reaktionsparametern korrigierend eingreifen zu können.

Diese im Bedarfsfall schnelle und gezielte Korrektur von Reaktionsparametern wird unter anderem durch geeignete zeitliche Abstände zwischen zwei wiederkehrenden Polymer-Probennahmen aus dem Polymer-Herstell-Prozess sichergestellt. Der regelmäßige Abstand zwischen zwei solchen Probenahmen sollte im Normalfall nicht mehr als 2 Stunden betragen, vorzugsweise sollte er nicht mehr als 1 Stunde betragen. Bei Umstellungen des hergestellten Polymer-Typs oder bei gezielten Eingriffen in die Reaktion jedoch sollte der Abstand zwischen zwei Probenahmen kleiner als 1 Stunde, vorzugsweise kleiner als eine halbe Stunde sein.

Der Zeitbedarf für einen vollständigen Probendurchlauf durch das erfindungsgemäße Analysenverfahren, von der Probennahme aus dem Polymer-Herstell-Prozess bis zur Ausgabe des Messergebnisses in Form einer Lösungsviskosität ηᵣₑₗ und/oder MVR der Polymer-Probe, beträgt von 1 bis 120 min, bevorzugt von 2 bis 60 min. Um Proben aus dem Polymer-Herstellprozess in kurzen Zeitabständen entnehmen und vermessen zu können, besteht die Möglichkeit, mehr als eine GPC-Anlage parallel zu betreiben und mit der Proben-Injektion auf die nächste unabhängige GPC-Anlage bereits zu beginnen, während die erste GPC-Anlage noch an der Molmassen-Trennung arbeitet. Wenn keine so hohe zeitlich Auflösung erforderlich ist, können auch Polymer-Lösungen aus verschiedenen Reaktionen innerhalb eines Produktionsstandortes zeitlich hintereinander auf ein GPC-System aufgegeben werden. Das Verhältnis von Polymer-Lösungen aus verschiedenen Reaktionen zu GPC-Systemen kann je nach Bedarf hinsichtlich zeitlicher Auflösung und Präzision der Messung im Bereich von 10:1 bis 1:10 variiert werden. Bevorzugt sind Verhältnisse von 5:1 bis 1:5; besonders bevorzugt sind Verhältnisse von 3:1 bis 1:3.

Die Berechnung von Polymer-Lösungsviskositäten, insbesondere von Polycarbonat-Lösungsviskositäten, in Form von Werten für ηᵣₑₗ oder Schmelzvolumenfließraten (MVR) aus den per GPC ermittelten Daten, zum Beispiel der Polymer-Molmassen, erfolgt auf der Basis von Kalibrierbeziehungen. Da MVR und ηᵣₑₗ Werte hervorragend mit gemessenen Mₙ und M_{w} Werten von Polymeren, insbesondere Polycarbonat korrelieren, ist es daher möglich, aus einem on-line gemessenen M_{w} Wert die gemäß DIN 51562 bestimmte ηᵣₑₗ. und/oder die gemäß DIN EN ISO 1133 bestimmte MVR des hergestellten Polymers vorherzusagen. Eine solche Kalibrierbeziehung ist in einer bevorzugten Ausführungsform des erfindungsgemäßen Analysenverfahrens in einem geeigneten Apparat softwaremäßig hinterlegt, so dass eine automatische Verknüpfung zwischen dem durch GPC gemessenen Wert für die Molmasse M_{w} und der zugehörigen Lösungsviskosität ηᵣₑₗ bzw. der zugehörigen MVR hergestellt und angezeigt werden kann.

Weiterer Gegenstand der Erfindung ist eine Vorrichtung zur Durchführung des erfindungsgemäßen Analysenverfahrens, die Mittel zur Probennahme aus dem Herstellprozess, eine Dosiereinrichtung zur präzisen Förderung genau definierter kleinster Probenmengen, mindestens eine Vorrichtung zur Durchführung der Gelchromatographie und die erforderliche Hard- und Software zur Steuerung des Analysenverfahrens und zur Auswertung der Messergebnisse umfasst.

In einer Ausführungsform enthält die erfindungsgemäße Vorrichtung wenigstens eine Entnahmeleitung für die Lösung des zu messenden Polymeren in einem organischen Lösemittel aus einem Anlagenteil des Polymer-Herstellprozesses, insbesondere eines Polycarbonat-Herstellprozesses, in dem diese Polymer-Lösung von anorganischen Salzen weitestgehend befreit ist. Zweckmäßiger Weise ist die Entnahmeleitung mit dem Hauptstrom der Produktionsanlage und dem Analysengerät einschließlich der Probenahme derart verbunden, dass eine Entnahme der Polymerlösung im Nebenstrom aus dem Hauptstrom in kontinuierlicher Weise erfolgt.

Bei der Probenentnahme einer Polymer-Lösung aus einem Grenzflächenverfahren, insbesondere einer Polycarbonat-Lösung aus dem Verfahrensabschnitt der Wäsche über die Entnahmeleitung zum Ventil steht in dieser Leitung der Druck des Trennapparates an, der die organische Polymer-Lösung von der wässrigen Waschphase trennt. Dieser Druck ist im Allgemeinen ausreichend, um den kontinuierlichen Transport von organischer Polymer-Lösung durch die Entnahmeleitung zum Ventil zu gewährleisten, so dass für diesen Transport keine separate Pumpe erforderlich ist. Im Bedarfsfall kann jedoch eine Pumpe zur Förderung erforderlich sein.

In einer Ausführungsform enthält die erfindungsgemäße Vorrichtung wenigstens eine Probeschleife (sample loop), durch die von der Entnahmeleitung ein bestimmtes Volumen von 1 bis 100 ml über mehrere 3-Wege-Ventile abgetrennt wird. Die Probeschleife wird durch zwei 3-Wege-Ventile begrenzt, die so geschaltet sind, dass entweder die Probeschleife kontinuierlich mit Probe durchströmt wird oder die in der Probeschleife befindliche Polymer-Lösung zum analytischen Mehrwegeventil transferiert wird. Weiterhin ist eine weitere Leitung für reines organisches Lösemittel vorhanden, die unter dem Überdruck einer Lösemittelpumpe steht und ebenfalls mit einem der 3-Wege-Ventile verbunden ist, um den Transfer der Polymer-Lösung zu ermöglichen.

In einer Ausführungsform enthält die erfindungsgemäße Vorrichtung eine Vorrichtung, um eine organische Lösung eines Polymeren mit bekannten gelpermeationschromatografischen Daten, z. B. M_{w}, ηᵣₑₗ und MVR in gleicher Konzentration wie die Polymer-Lösung aus dem Herstellprozess aus einem Vorratsgefäß zu entnehmen, z.B. mit Hilfe einer geeigneten Pumpe.

In einer Ausführungsform der erfindungsgemäßen Vorrichtung umfasst die Dosiereinrichtung zur präzisen Förderung genau definierter kleinster Probenmengen ein analytisches Mehrwegeventil (5-oder 6-Wege-Ventil), das eine oder mehrere Probenschleifen enthält oder mit ihnen verbunden ist, mit denen Probenvolumina im Bereich von 1 µl bis 10 µl exakt dosiert werden können.

In einer Ausführungsform enthält das analytische Mehrwege-Ventil eine Injektionsschleife (injection loop) für die GPC mit einem Volumen im Bereich von 1 µl bis 10 µl, oder weist eine extern angeordnete Injektionsschleife mit einem Volumen im Bereich von 1 bis 10 µl auf. Das analytische Mehrwege-Ventil hat verschiedene Ventilstellungen. In einer definierten Ventilstellung kann eine Injektionsschleife kontinuierlich von einer zu messenden Polymer-Lösung durchflossen werden. In einer anderen definierten Ventilstellung kann die in der Injektionsschleife vorhandene zu messende Polymer-Lösung aus der Injektionsschleife herausgedrückt und in eine Leitung gefördert werden, die mit der GPC (bzw. den GPC-Säulen) verbunden ist. In einer anderen definierten Ventilstellung kann die Injektionsschleife kontinuierlich von reinem Lösemittel durchflossen und auf diese Weise gespült werden. In einer Ausführungsform wird diese Spüllösung getrennt aufgefangen.

In einer Ausführungsform handelt es sich bei dem analytischen Mehrwege-Ventil um einen zylindrischen oder kugelförmigen Ventilkern, der drehbar in einem dazu passenden und dicht schließenden Ventilsitz gelagert ist, wobei sowohl der Ventilkern als auch der Ventilsitz mehrere Bohrungen enthalten. Die Bohrungen von Ventilkern und Ventilsitz können durch geeignete Drehung des Ventilkerns so einander gegenüber positioniert werden, dass die erforderlichen Verbindungen zwischen Bohrungen im Ventilsitz und Bohrungen im Ventilkern entstehen, damit die oben beschriebenen Funktionen möglich sind. Durch eine hinreichende Abdichtung zwischen Ventilkern und Ventilsitz wird sichergestellt, dass keine nennenswerten Leckageströmungen in eine nicht beabsichtigte Richtung auftreten. Ein solches Mehrwege-Ventil kann zum Beispiel ein 5-Wege-Ventil oder auch ein 6-Wege-Ventil sein. Solche Ventile sind dem Fachmann hinreichend bekannt.

In einer Ausführungsform des Mehrwege-Ventils sind mehrere Probenschleifen als kanalförmige dünne Bohrungen im Ventilkern angeordnet, die zwei benachbarte Öffnungen im Ventilkern miteinander verbinden. Im Falle eines 6-Wege-Ventils sind drei gleich große Probenschleifen im Ventilkern vorhanden, die mit jeweils zwei von sechs Öffnungen im Ventilsitz mit einander verbunden sind. Die sechs Öffnungen im Ventilsitz sind mit Leitungen verbunden und je zwei, durch die Ventil-Konstruktion vorgegeben, benachbarte Leitungen im Ventilsitz werden durch je eine Probenschleife im Ventilkern durchgängig miteinander verbunden. Die Anordnung der Leitungen an den sechs Öffnungen im Ventilsitz erfolgt dabei so, dass je eine Probenschleife mit der Polymer-Lösung durchflossen wird, je eine Probenschleife mit Lösemittel zur GPC-Säule hin entleert wird und je eine Probenschleife mit Lösemittel in ein Abfallgefäß hin durchspült und entleert wird.

In weiteren Ausführungsformen können Mehrwege-Ventil verwendet werden, die anstelle von Probenschleifen, die im Ventilkern angebracht sind, mit Probenschleifen verbunden sind, die außerhalb des Ventils liegen. Die Funktionsweise eines Mehrwege-Ventils ist dabei unabhängig davon, ob die Probenschleife innerhalb oder außerhalb des Ventils angeordnet ist.

Derartige Ventile und Probenschleifen sind prinzipiell bekannt und im Handel erhältlich. Geeignete Mehrwege-Ventile sind z.B. solche des Typs ETC6UW oder EDC6UW der Valco Instruments Co. Inc., VICI AG International, 8300 Waterbury, Houston, TX 77055, USA, oder Schaltventile des Typs MX von IDEX Health& Science LLC, 600 Park Court, Rohnert Park, CA 94928, USA (z.B. No. 447900). Die Probenschleifen weisen ein Volumen von 1-10 µl auf, bevorzugt ein Volumen von 3-7 µl. Hierzu können beispielsweise Edelstahlkapillaren mit 1/16" Außendurchmesser und einem Innendurchmesser von 100-250 µm in entsprechender Länge verwendet werden.

In einer Ausführungsform wird für die Förderung des reinen Lösemittels, das zum Transfer der hochkonzentrierten Polymer-Lösung aus dem Nebenstrom in die Injektionsschleife benötigt wird, eine für die HPLC geeignete Pumpe eingesetzt, z.B. eine Hochdruckdoppelkolbenpumpe, die bei einem Druck bis zu 600 barü fördern kann.

In einer Ausführungsform enthält die erfindungsgemäße Vorrichtung eine oder mehrere parallel zu betreibende GPC mit allen notwendigen Einrichtungen zur Durchführung des gelchromatographischen Messverfahrens und Ermittlung der verschiedenen gelpermeationschromatographischen Daten, zum Beispiel der Molekulargewichte M_{w}, Mₙ, oder Mₚ des Polymeren aus der Probenlösung.

Die GPC, die auch mehrfach vorhanden sein kann und somit einen zeitversetzten parallelen Messbetrieb zum Beispiel bei erhöhter Probennahme-Frequenz erlaubt, kann eine oder mehrere hintereinander geschaltete handelsübliche GPC-Säulen zur Größenausschluss-Chromatographie umfassen, die so ausgewählt sind, dass eine hinreichende Trennung der Molmassen von Polymeren, insbesondere von aromatischen Polycarbonaten mit gewichtsmittleren Molmassen M_{w} von 5.000 bis 100.000 g/mol möglich ist.

In einer Ausführungsform werden mehrere hintereinander geschaltete analytische Säulen mit einem Durchmesser von 7,5 mm und einer Länge von 300 mm eingesetzt. Die Partikelgrößen des Säulenmaterials liegen im Bereich von 3 bis 20 µm. Die Säulen sind so auszuwählen, dass die aus den gelpermeationschromatographischen Daten zu ermittelnden ηᵣₑₗ und MVR-Werte der verschiedenen herzustellenden Produkte mit ausreichender Sicherheit unterschieden werden können. Werden zum Beispiel die M_{w}-Werte für Berechnung von ηᵣₑₗ und MVR herangezogen, müssen die entsprechenden M_{w}-Werte mit ausreichender Sicherheit unterschieden werden können. Werden beispielsweise verschiedene Polymere hergestellt, die sich im Molekulargewichtsmittel M_{w} um 1.000 g/mol unterscheiden, so muss dieser Unterschied mit Hilfe der verwendeten GPC sicher unterscheidbar sein. Es werden daher hohe Anforderungen an die Genauigkeit und vor allem an die Präzision der GPC gestellt.

Als Elutionsmittel werden geeignete organische Lösungsmittel verwendet, z.B. THF, Chlorform oder Dichlormethan. In einer Ausführungsform wird Dichlormethan eingesetzt. Geeignete Pumpen sind die typischen für die Hochdruckflüssigchromatographie verwendeten Pumpen, z.B. Hochdruck-Doppelkolbenpumpen, die einen sehr konstanten und präzisen Fluss über die GPC-Säulen gewährleisten. Als Detektoren können Brechungsindexdetektoren (RI), UV-Detektoren, EvaporationLightScattering (ELS)-Detektoren, Viskositätsdetektoren (z.B. Ein-, Zwei- oder Vierkapillarviskosimeter) oder Streulichtdetektoren verwendet werden. Bevorzugt sind UV- und RI-Detektoren.

Die Kalibrierung der GPC erfolgt mit Polymeren bekannter Molmassen und/oder Molmassenverteilungen, z.B. mit bekannten Mₚ-Werten. Bevorzugt werden Polycarbonate oder Polystyrole verwendet. Hiervon werden Polymer-Lösungen einer dem Produktionsprozess entsprechenden Konzentration angesetzt und anstelle der Polymer-Lösung aus der Produktion mit Hilfe einer geeigneten Pumpe, z.B. einer Membranpumpe, in die Entnahmeleitung eingespeist. In einer Ausführungsform erfolgt die Steuerung, ob eine Probe aus der Produktion oder eine Kalibrierprobe in die Entnahmeleitung eingespeist wird, mit Hilfe eines Computers.

Die GPC-Anlage kann mit einem zusätzlichen automatischen Probengeber ausgestattet sein, mit dem verdünnte Polymerlösungen z. B. zur Systemüberprüfung injiziert werden können.

Die Steuerung der GPC-Anlage inklusive des Mehrwegeventiles zur Injektion und die Auswertung der Chromatogramme erfolgt bevorzugt nach dem Fachmann bekannten Methoden mit Hilfe eines Computers und einer geeigneten Software, z.B. PSS WinGPC Unity.

In einer Ausführungsform enthält die erfindungsgemäße Vorrichtung weitere Vorrichtungen zur Berechnung und Anzeige der Lösungsviskosität ηᵣₑₗ und/oder der Schmelzvolumenfließrate MVR der gemessenen Polymer-Probe auf der Basis von Kalibrierbeziehungen.

In einer Ausführungsform enthält die erfindungsgemäße Vorrichtung Steuerungsvorrichtungen zur vollautomatischen kontinuierlichen Regelung des zeitlichen Ablaufs von Kalibrierung, Probennahme, Ansteuerung aller Ventile, Probendosierung auf die GPC, Starten des GPC-Messverfahrens, Spülen der Probenschleife, Anzeige und/oder Dokumentation des Messergebnisses und erneuter Probennahme.

In einer Ausführungsform umfasst die erfindungsgemäße Vorrichtung die folgenden Anlagenteile:
a) Eine Entnahmeleitung für die Lösung des zu messenden Polymers in einem organischen Lösemittel aus einem Anlagenteil des Polymer-Herstell-Prozesses, in dem diese Polymerlösung von anorganischen Salzen weitestgehend befreit wird, wobei diese Leitung unter einem Überdruck steht und mit dem Ventil verbunden ist und eine Entnahme der Polymerlösung im Nebenstrom aus dem Hauptstrom erlaubt. Von der Entnahmeleitung ist ein bestimmtes Volumen über Ventile abzutrennen. Das so separierbare Volumen wird Probeschleife (sample loop) genannt.
b) Eine Vorrichtung zur Kalibrierung, mit der anstelle der Polymerlösung aus dem Herstellprozess die organische Lösung eines Polymers mit bekannten gelpermeationschromatografischen Daten, z. B. M_{w}, ηᵣₑₗ. und MVR in gleicher Konzentration wie die Polymerlösung aus dem Herstellprozess in die Entnahmeleitung mit Hilfe einer geeigneten Pumpe gepumpt werden kann.
c) Eine Leitung für reines organisches Lösemittel, die unter dem Überdruck einer Lösemittelpumpe steht und ebenfalls mit dem Ventil über die unter a) beschriebene Entnahmeleitung verbunden ist;
d) Ein analytisches Mehrwege-Ventil, das eine Injektionsschleife (injection loop) für die GPC enthält, oder mit einer extern angeordneten Injektionsschleife derart verbunden ist, dass diese Injektionsschleife von der zur messenden Polymerlösung in einem organischen Lösemittel bei einer bestimmten Ventilstellung kontinuierlich durchflossen werden kann, wobei diese Injektionsschleife ein genau definiertes Volumen zwischen 1 und 10 µl aufweist, in einer anderen definierten Ventilstellung die in der Injektionsschleife vorhandene zu messende Polymerlösung mit dem Überdruck eines Lösemittels aus der Injektionsschleife herausgedrückt und in eine Leitung gefördert werden kann, die mit der GPC verbunden ist, und in einer weiteren definierten Ventilstellung die Injektionsschleife kontinuierlich von reinem Lösemittel durchflossen werden und auf diese Weise gespült werden kann, wobei diese Spüllösung getrennt aufgefangen wird.
e) Eine Leitung von dem Ventil d) zur GPC, wobei in der Leitung das genau definierte Volumen der zu messenden PC-Lösung aus der Injektionsschleife mit Hilfe des Überdrucks von reinem Lösemittel in den Kopf der betriebsbereiten GPC gefördert wird.
f) Eine oder ggf. mehrere parallel zu betreibende GPC mit allen notwendigen Einrichtungen zur Durchführung des gelchromatographischen Messverfahrens und Ermittlung der gelpermeationschromatographischen Daten, zum Beispiel der verschieden definierten Molekulargewichte M_{w}, Mₙ, Mₚ, D des Polymeren aus der Probenlösung.
g) Weitere Vorrichtungen zur kontinuierlichen Berechnung und Anzeige der Lösungsviskosität ηᵣₑₗ. und/oder der Schmelzvolumenfließrate MVR aus den gelpermeationschromatographischen Daten, zum Beispiel den Molekulargewichten der gemessenen Polymerprobe auf der Basis von Kalibrierbeziehungen.
h) Steuerungsvorrichtungen zur vollautomatischen kontinuierlichen Regelung des zeitlichen Ablaufs von Probennahme, Probendosierung auf die GPC, Starten des GPC-Messverfahrens, Spülen der Probenschleife, Anzeige und/oder Dokumentation des Messergebnisses und erneuter Probennahme.

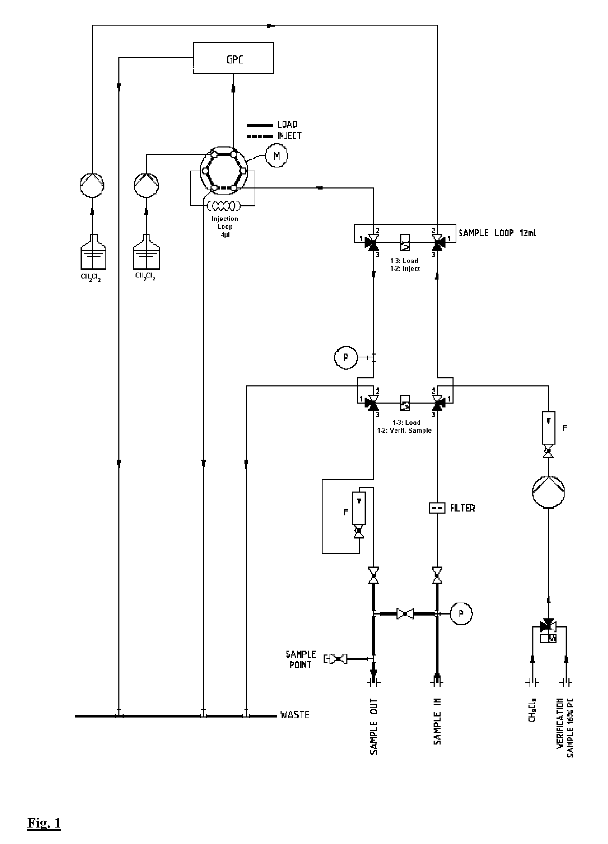

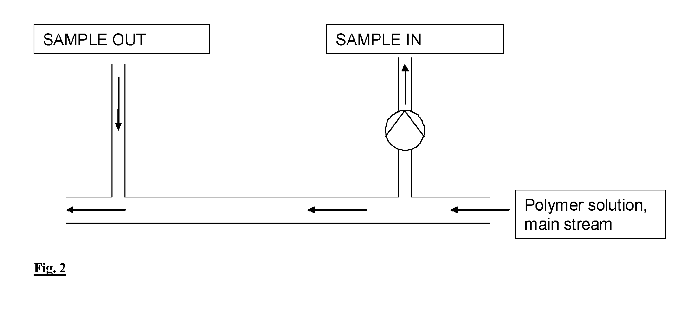

Fig. 1 und Fig. 2 zeigen beispielhaft einen schematischen Versuchsaufbau des Probenahme- und Injektionskonzeptes. Die kontinuierliche Entnahme der Lösung des zu messenden Polymeren in einem organischen Lösemittel erfolgt aus einem Anlagenteil des Polymer-Herstell-Prozesses, in dem diese Polymer-Lösung von anorganischen Salzen weitestgehend befreit ist. Die Lösung steht unter einem Überdruck, der gegebenenfalls mit einer zusätzlichen Pumpe aufgebaut wird. Dabei wird der über die Entnahmeleitung genommene Teilstrom kontinuierlich dem analytischen Meßsystem zugeführt und dabei im Kreis wieder in den Hauptstrom zurück geführt. Fig. 1 zeigt die Entnahme der Probe und die Anknüpfung an das analytische Meßsystem inklusive des Probenaufgabesystems und der Anbindung an die GPC. Fig. 2 zeigt die Verbindung zwischen analytischem Meßsystem und dem Hauptstrom über die Entnahmeleitung.

Die Entnahme einer Probe erfolgt über ein Probenentnahmesystem in folgender Weise: Von der Entnahmeleitung wird ein bestimmtes Volumen über mehrere 3-Wege-Ventile abgetrennt. Das so separierbare Volumen wird Probeschleife (sample loop) genannt und hat ein Volumen von 1-100 ml (in Fig. 1 beispielhaft 12 ml). Die Probeschleife wird durch zwei 3-Wege-Ventile begrenzt, die so geschaltet sind, dass entweder die Probeschleife kontinuierlich mit Probe durchströmt wird oder die in der Probeschleife befindliche Polymer-Lösung zum analytischen Mehrwegeventil transferiert wird. Der Transfer geschieht durch eine weitere Leitung für reines organisches Lösemittel, die unter dem Überdruck einer Lösemittelpumpe steht und ebenfalls mit einem der 3-Wege-Ventil verbunden ist. Die Ventilpositionen zum Füllen der Probeschleife mit Polymerlösung sind in Fig. 1 mit "Load" in den Positionen 1-3 bezeichnet und für den Transfer der Probe zum analytischen Mehrwegeventil mit "Inject" in den Positionen 1-2 bezeichnet.

Optional wird eine Polymerlösung zur Kalibration verwendet. Dies erfolgt durch eine Vorrichtung zur Kalibrierung, bei der die organische Lösung eines Polymeren mit bekanntem M_{w}, Molekulargewichtsverteilung, ηᵣₑₗ und MVR, wobei die Polymerkonzentration in der Lösung gleich groß ist wie die Konzentration des Polymeren in der Polymer-Lösung aus dem Herstellprozess, mit Hilfe einer geeigneten Pumpe aus einem Vorratsgefäß ("Verification sample 16% PC" in Fig. 1) in die Entnahmeleitung gepumpt wird. Diese Kalibrierprobe wird gegebenenfalls über ein weiteres 3-Wege-Ventil vor der Probeschleife in das Probenahmesystem eingeschleust. In den Positionen 1-3 erfolgt die Probenahme aus dem Produktionsprozeß (in Fig. 1 mit "Load" bezeichnet), in Positionen 1-2 erfolgt die Einspeisung der Kalibrierprobe (in Fig. 1 als "Verif. Sample" bezeichnet). Erfolgt die Einspeisung der Kalibrierprobe, wird diese Polymer-Lösung nicht in den Hauptstrom eingeleitet sondern in den Abfall ("waste").

Die Vorrichtung umfasst ein analytisches Mehrwege-Ventil, das eine Injektionsschleife (injection loop) für die GPC enthält, oder eine extern angeordnete Injektionsschleife eines genau definierten Volumens im Bereich von 1 bis 10 µl aufweist. In definierten Ventilstellungen wird eine Injektionsschleife kontinuierlich von einer zu messenden Polymer-Lösung beim Transfer der Polymerlösung aus der Probenschleife in die Injektionsschleife durchflossen. In einer anderen definierten Ventilstellung wird die in der Injektionsschleife vorhandene zu messende PC-Lösung mit dem Überdruck eines Lösemittels aus der Injektionsschleife herausgedrückt und in eine Leitung gefördert, die mit der GPC verbunden ist. In einer weiteren definierten Ventilstellung wird die Injektionsschleife kontinuierlich von reinem Lösemittel durchflossen und auf diese Weise gespült, wobei diese Spüllösung getrennt aufgefangen wird.

Durch eine Leitung von dem analytischen Mehrwege-Ventil zur GPC (bzw. den GPC-Säulen) wird das genau definierte Volumen der zu messenden PC-Lösung mit Hilfe eines Überdrucks von reinem Lösemittel aus der Injektionsschleife in den Kopf der betriebsbereiten GPC gefördert. Zur Durchführung des gelchromatographischen Messverfahrens und zur Ermittlung der gelpermeationschromatographischen Daten, insbesondere der verschieden definierten Molekulargewichte M_{w}, Mₙ, Mₚ, M_{z} oder D des Polymeren aus der Probenlösung sind eine oder ggf. mehrere parallel zu betreibende GPC mit allen notwendigen Einrichtungen vorhanden.

Die verschiedenen Leitungen wie die Entnahmeleitungen, Lösemittelleitungen etc. können unabhängig voneinander temperiert sein, um auf die jeweils zu bestimmende Polymer-Lösung optimiert zu sein.

### Beispiele

### Ermittlung der Kalibrierbeziehungen für Polycarbonat

Das Molekulargewicht M_{w} von 15 Polycarbonatproben (je drei Proben auf fünf verschiedenen Viskositätsniveaus; für die Kalibrierbeziehung wurden je Viskositätsniveau Mittelwerte der drei Proben gebildet) mit Viskositäten in einem Bereich von ηᵣₑₗ = 1,250 - 1,34 (gemäß DIN 51562) bzw. MVR (gemäß DIN EN ISO 1133 bei 300°C und 1,2 kg) in einem Bereich von 4-16 [cm³/10 min] und einem M_{w} im Bereich von 22000-34000 [g/mol] wurde mittels GPC bestimmt und die GPC mit linearen PC bekannter Molmassenverteilungen kalibriert.

### Beispiel 1

Für den Versuch wurde die in Fig. 1 abgebildete Vorrichtung eingesetzt. Es wurde eine 16 Gew.-% PC in einem 1:1 Lösemittelgemisch aus Dichlormethan (DCM) und Monochlorbenzol enthaltende Lösung mit Hilfe einer Membranpumpe durch eine Edelstahlleitung gepumpt, welche die Probenahmeleitung simulierte. Durch Umlegen von 2 Ventilen und mit Hilfe einer kontinuierlich laufenden HPLC-Pumpe, die DCM pumpt, wurde dann die in der sample loop (V = 12 ml) befindliche 16 Gew.-%ige Lösung in die Probenschleife (injection loop) des 6-Wege-Ventiles transferiert. Das Volumen der Probenschleife betrug ca. 4 µl. Als die Probenschleife vollständig mit der 16 Gew.-%igen Lösung gefüllt war, wurde das 6-Wege-Ventil geschaltet und die Probe mit einer zweiten HPLC-Pumpe, die ebenso DCM pumpt, auf die GPC Säulen injiziert. Hinter den GPC-Säulen befanden sich ein UV- und ein RI-Detektor. Die Chromatogramme wurden mit Hilfe einer zuvor aufgenommenen PC-Kalibrierung ausgewertet.

Die nachstehende Tabelle 1 zeigt das Ergebnis einer 6fach-Bestimmung der M_{w}-Werte (mit UV-Detektor), ηᵣₑₗ und MVR-Werte einer Probe. Der zeitliche Abstand zwischen den einzelnen Injektionen betrug ca. 48 min. Die Umrechnung in ηᵣₑₗ und MVR-Werte erfolgte mit den zuvor aufgenommenen Kalibrierbeziehungen. Die Standardabweichung für M_{w} lag bei ±163 g/mol oder 0,6 %. Die Standardabweichung für ηᵣₑₗ lag bei ±0,0014. Die Standardabweichung für MVR lag bei ±0,2 [cm³/10 min]. Diese Standardabweichungen für ηᵣₑₗ und MVR entsprechen der Präzision einer ηᵣₑₗ-Bestimmung mit einem Ubbelohde-Viskosimeter bzw. der einer MVR-Bestimmung mit einem Schmelzindexprüfgerät und sind ausreichend präzise für eine Prozessüberwachung- und -steuerung.

**Tabelle 1**

| Versuch | M_{w} [g/mol] gemessen mit GPC (UV-Detektor) | ηᵣₑₗ berechnet aus Korrelation | MVR* berechnet aus Korrelation [cm³/10 min] |
|---|---|---|---|
| 1 | 27776 | 1,291 | 8,6 |
| 2 | 28105 | 1,294 | 8,2 |
| 3 | 27963 | 1,293 | 8,4 |
| 4 | 27905 | 1,292 | 8,5 |
| 5 | 27993 | 1,293 | 8,4 |
| 6 | 28248 | 1,295 | 8,1 |
| Mittelwert | 27998 | 1,293 | 8,4 |
| Standardabweichung | 163 | 0,0014 | 0,2 |

| | | | |
|---|---|---|---|
| * gemäß DIN EN ISO 1133 bei 300 °C und 1,2 kg | | | |

### Beispiel 2

Um das online-Probenahme- und -Injektionskonzept (Dosierung von 4 µl einer ca. 16 Gew.-%igen Lösung) mit dem für offline-Injektionen etablierten Konzept (Injektion von 100 µl einer 0,2 Gew.-%igen Lösung) zu vergleichen, wurde eine zweite 16 Gew.-%ige PC-Lösung zunächst über das oben beschriebene online Konzept dosiert. Anschließend wurde die 16 Gew-%ige PC-Lösung mit DCM auf 0,2 Gew.-% verdünnt und es wurden hiervon 100 µl mit einem automatischen Probengeber injiziert. Folgende Ergebnisse wurden erhalten:
Online-Probenahme/Injektion: M_{w} = 24052 g/mol
Standard offline-Injektionssystem: M_{w} = 23874 g/mol

Im Rahmen der Messgenauigkeit sind die Ergebnisse als gleich anzusehen. Damit wird die Eignung des neuen Probenahme- und Injektionskonzeptes für die online Anwendung belegt.

## Patentansprüche

1. Verfahren zur automatischen Bestimmung der relativen Lösungsviskosität ηᵣₑₗ und/oder der Schmelzvolumenfließrate MVR eines Polymeren während einer Phase des Herstellprozesses des Polymeren, in dem das Polymer als 10 bis 20 Gew.-%ige Lösung in einem organischen Lösemittel vorliegt, umfassend die Schritte:
a) kontinuierliche Entnahme eines Teilstroms der Polymerlösung aus einem Anlagenteil des Herstellprozesses, in dem die Polymerlösung weitestgehend frei von anorganischen Salzen ist;
b) Entnahme einer Probe mit einem Volumen von 1 bis 10 µl aus dem Teilstrom;
c) Zuführen der Probe zu einer Gelpermeationschromatographie-Vorrichtung und Ermittlung von gelpermeationschromatographischen Daten des Polymeren;
d) Automatische Ermittlung der relativen Lösungsviskosität ηᵣₑₗ und/oder der Schmelzvolumenfließrate MVR des Polymeren aus den aus dem Gelpermeationschromatogramm erhaltenen Daten auf der Basis von Kalibrierbeziehungen.

2. Verfahren gemäß Anspruch 1, bei dem der entnommene Teilstrom der Polymerlösung wieder in den Herstellprozess zurückgeführt wird.

3. Verfahren gemäß Anspruch 1 oder 2, das zusätzlich das Zuführen einer Probe mit einem Volumen von 1 bis 10 µl einer Lösung eines Polymeren, dessen gelpermeationschromatographische Daten, relative Lösungsviskosität ηᵣₑₗ und Schmelzvolumenfließrate MVR bekannt sind, zu der Gelpermeationschromatographie-Vorrichtung und Ermittlung der gelpermeationschromatographischen Daten des Polymeren sowie die automatische Ermittlung der relativen Lösungsviskosität ηᵣₑₗ und/oder der Schmelzvolumenfließrate MVR des Polymeren aus dem ermittelten gelpermeationschromatographischen Daten auf der Basis von Kalibrierbeziehungen umfasst.

4. Verfahren gemäß einem der Ansprüche 1 bis 3, bei dem das Polymere Polycarbonat ist, das durch Phasengrenzflächen-Polykondensation hergestellt wird.

5. Verfahren gemäß einem der Ansprüche 1 bis 4, bei dem die gelpermeationschromatographischen Daten das gewichtsmittlere Molekulargewicht M_{w} umfassen.

6. Verfahren gemäß einem der Ansprüche 1 bis 4, bei dem die gelpermeationschromatographischen Daten das zahlenmittlere Molekulargewicht Mₙ umfassen.

7. Verfahren gemäß einem der Ansprüche 1 bis 4, bei dem die gelpermeationschromatographischen Daten das Molekulargewicht Mₚ umfassen.

8. Vorrichtung zur Ermittlung der relativen Lösungsviskosität ηᵣₑₗ und/oder der Schmelzvolumenfließrate MVR eines Polymeren aus einer 10 bis 20 Gew.-%igen Lösung des Polymeren in einem organischen Lösemittel, umfassend:
a) Eine Entnahmeleitung für die Lösung des zu messenden Polymers in einem organischen Lösemittel aus einem Anlagenteil des Polymer-Herstell-Prozesses,
b) Eine Dosiereinrichtung zur präzisen Förderung einer Probe der Lösung des Polymeren mit einem definierten Volumen im Bereich von 1 bis 10 µl;
c) Eine Vorrichtung zur Ermittlung gelpermeationschromatographischer Daten des Polymeren;
d) Mittel zur Ermittlung der relativen Lösungsviskosität ηᵣₑₗ und/oder der Schmelzvolumenfließrate MVR des Polymeren aus den aus dem Gelpermeationschromatogramm erhaltenenen Daten auf Basis von Kalibrierbeziehungen.

9. Vorrichtung gemäß Anspruch 8, zusätzlich umfassend Mittel zur Entnahme eines Teilstroms einer 10 bis 20 Gew.-%igen Lösung des Polymeren aus einem Herstellprozess des Polymeren.

10. Vorrichtung gemäß Anspruch 8 oder 9, zusätzlich umfassend einen Vorratsbehälter mit einer 10 bis 20 Gew.-%igen Lösung eines Polymeren, dessen gelpermeationschromatographische Daten, relative Lösungsviskosität ηᵣₑₗ und Schmelzvolumenfließrate MVR bekannt sind, in einem organischen Lösemittel.

11. Vorrichtung gemäß einem der Ansprüche 8 bis 10, bei der die Dosiereinrichtung ein Mehrwegeventil umfasst, das eine oder mehrere Probenschleifen enthält oder mit einer oder mehreren Probenschleifen verbunden ist, mit denen Probenvolumina im Bereich von 1 bis 10 µl exakt dosiert werden können.
